# EUROPÄISCHE PATENTANMELDUNG

(11) **EP 2 561 827 A2**
(43) Veröffentlichungstag der Anmeldung: **27.02.2013**
(21) Anmeldenummer: 12006110.6
(22) Anmeldetag: 02.02.2009
(51) Int. Cl.: A61C 8/00

(54) **Zahnimplantat und Verfahren zu seiner Herstellung**

(30) Priorität: 29.02.2008 DE 102008011963
(62) Teilanmeldung aus: 09714335.8
(71) Anmelder: Cyron, Axel, 38229 Salzgitter (DE); Rupprecht, Bernd, 37327 Leinefelde-Worbis OT Beuren (DE)
(72) Erfinder: Cyron, Axel, 38229 Salzgitter (DE); Rupprecht, Bernd, 37327 Leinefelde-Worbis OT Beuren (DE)
(74) Vertreter: Schneider, Peter Christian

(57) **Zusammenfassung**

Die Erfindung bezieht sich auf ein Zahnimplantat, umfassend
- einen bereichsweise in einen Kieferknochen inserierbaren Sockel (10) mit einem apikal gelegenen Körper (12) und einem koronal gelegenen Hals (14), deren äußere Oberflächen jeweils eine Oberflächen-Mikrostruktur vorgegebener Rauheit aufweisen, und
- einen Aufbau (40), der mit einem konischen Verbindungsbereich (46) in einen Aufnahmebereich (32) des innen hohl ausgebildeten Sockels (10) einsetzbar ist, wobei der konische Verbindungsbereich (46) eine mit einem Aufbau-Kegelwinkel konisch nach apikal zulaufende Außenfläche aufweist und der Aufnahmebereich (32) eine mit einem Sockel-Öffnungswinkel konisch nach apikal zulaufende Innenfläche (34) aufweist.

Die Erfindung zeichnet sich dadurch aus, dass der Aufbau-Kegelwinkel 20 bis 60 Bogenminuten größer ist als der Sockel-Öffnungswinkel.

Die Wirkung der Erfindung besteht in einer Verbesserung der Gas- und Bakteriendichtigkeit am Übergang zwischen Sockel (10) und Aufbau (40).

## Beschreibung

### Gebiet der Erfindung

Die Erfindung bezieht sich auf ein Zahnimplantat, umfassend
- einen bereichsweise in einen Kieferknochen inserierbaren Sockel mit einem apikal gelegenen Körper und einem koronal gelegenen Hals, deren äußere Oberflächen jeweils eine Oberflächen-Mikrostruktur vorgegebener Rauheit aufweisen, und
- einen Aufbau, der mit einem konischen Verbindungsbereich in einen Aufnahmebereich des innen hohl ausgebildeten Sockels einsetzbar ist, wobei der konische Verbindungsbereich eine mit einem Aufbau-Kegelwinkel konisch nach apikal zulaufende Außenfläche aufweist und der Aufnahmebereich eine mit einem Sockel-Öffnungswinkel konisch nach apikal zulaufende Innenfläche aufweist.

### Stand der Technik

Derartige Zahnimplantate sind bekannt aus der EP 1 529 497 A1.

Enossale Zahnimplantate sind seit langem bekannt, wobei sich im Laufe der Entwicklung die unterschiedlichsten Varianten und unterschiedliche, zu ihrer Beschreibung verwendete Terminologien herausgebildet haben. Im Rahmen der hiesigen Anmeldung wird sowohl bei der Beschreibung des Standes der Technik als auch bei der Erläuterung der Erfindung von folgender Terminologie ausgegangen: das Zahnimplantat umfasst stets einen Sockel, der wenigstens bereichsweise in den Kieferknochen inseriert wird. Bei den von der vorliegenden Erfindung betroffenen Zahnimplantaten ist der Sockel in zwei axiale Bereiche unterteilbar. Ein erster Bereich, Körper genannt, ist in bestimmungsgemäßer Endlage im Wesentlichen vollständig in den Kieferknochen inseriert. Ein sich koronal anschließender zweiter Bereich, Hals genannt, ragt in bestimmungsgemäßer Endlage im Wesentlichen vollständig über den Kieferknochen hinaus und ist von Zahnfleischgewebe umgeben. Koronal des Sockels setzt typischerweise ein Aufbau an, der im Wesentlichen vollständig über das Zahnfleischgewebe hinausragt. Der Aufbau dient als Kern einer an ihm zu befestigenden Krone. Der Aufbau kann einstückig mit dem Sockel oder, wie bei den gattungsgemäßen Implantaten, als separates Bauteil ausgebildet sein, welches mit dem Sockel beispielsweise verschraubt oder verklebt wird.

Zur mechanischen Vorfixierung des Sockels im Kieferknochen ist die Außenfläche des Körpers oft mit einem ggf. selbstschneidenden Gewinde versehen, mit dem der Sockel in eine vorgebohrte Ausnehmung im Kieferknochen eingeschraubt wird. Eine dauerhafte Fixierung des Implantats hängt jedoch wesentlich von der über diese Vorfixierung hinausgehenden Wechselwirkung zwischen dem biologischen Material, d.h. Knochen- und/oder Zahnfleischgewebe, mit der Sockeloberfläche ab. Wichtig ist zunächst die Biokompatibilität des Sockelmaterials. Hier haben sich Sockel aus Titan oder Titanlegierungen bewährt. Für die optimale Wechselwirkung zwischen Gewebe und Sockelmaterial ist jedoch auch die Oberflächenstruktur des Sockels von erheblicher Bedeutung. Diesbezüglich wurden und werden vielfältige Studien mit zum Teil einander widersprechenden Ergebnissen durchgeführt. Einigkeit besteht darüber, dass eine Mikrostrukturierung der Oberfläche positive Effekte zeitigen kann.

Eine wichtige Problemzone von Zahnimplantaten ist der Übergang vom Sockel zum Aufbau. Typischerweise, so auch bei der gattungsbildenden EP 1 529 497 A1, ist der Sockel im Wesentlichen hohl gestaltet und weist einen Einführbereich für einen korrespondierenden Verbindungsbereich des Aufbaus auf. Die Verbindung zwischen Aufbau und Sockel erfolgt häufig durch eine den Aufbau durchsetzende und in ein Innengewinde des Sockels eingeschraubte Schraube. Hierdurch ergeben sich zwangsläufig bleibende Hohlräume im Sockelinneren. Es ist von besonderer Wichtigkeit, dass diese Hohlräume gas- und bakteriendicht abgeschlossen werden. Eine kritische Zone ist dabei die Kontaktzone zwischen der Aufnahmeöffnung des Sockels und dem Einführbereich des Aufbaus. Die genannte Druckschrift sieht daher vor, den Aufbau mit einem konischen Verbindungsbereich in den ebenfalls konischen Aufnahmebereich des innen hohl ausgebildeten Sockels einzusetzen, wobei der Kegelwinkel des konischen Verbindungsbereichs gleich dem Öffnungswinkel des Sockels ausgebildet ist. Hierdurch wird die Kontaktfläche zwischen Sockel und Verbindungsbereich des Aufbaus maximiert. Allerdings kann mit dieser Ausgestaltung die gewünschte, optimale Gas- und Bakteriendichtigkeit nicht in allen Fällen erreicht werden.

### Aufgabenstellung

Es ist die Aufgabe der vorliegenden Erfindung, gattungsgemäße Zahnimplantate derart weiterzubilden, dass die Gas- und Bakteriendichtigkeit im Übergangsbereich zwischen Sockel und Aufbau verbessert wird.

### Darlegung der Erfindung

Diese Aufgabe wird in Verbindung mit den Merkmalen des Oberbegriffs von Anspruch 1 dadurch gelöst, dass der Aufbau-Kegelwinkel 20 bis 60 Bogenminuten größer ist als der Sockel-Öffnungswinkel, wobei der Absolutbetrag des Sockel-Öffnungswinkels bzw. des Aufbau-Kegelwinkels bevorzugt bei 15 Grad bis 25 Grad, vorzugsweise bei ca. 20 Grad liegt.

Der Aufbau-Kegelwinkel ist daher geringfügig stumpfer als der Sockel-Öffnungswinkel. Dies führt zu einer scharfen, ringförmigen Kontaktzone zwischen dem konischen Verbindungsbereich des Aufbaus und der Aufnahmeöffnung des Sockels. Bei einer Verschraubung beider Elemente wirkt aufgrund der geringen Fläche der Kontaktzonen ein hoher Druck, der eine sehr gute Gas- und Bakteriendichtigkeit erzeugt. Auch zusätzlich stoffschlüssige Verbindungen von Aufbau und Sockel sind realisierbar, wobei der Stoffschluss fallweise vor oder nach dem Einsetzen des Sockels vorgenommen werden kann. Man beachte, dass diese Art der dichten Verbindung eine Umkehrung des so genannten Glasschliffdeckel-Prinzips darstellt, bei dem der Kegelwinkel eines einzuführenden Stopfens geringfügig spitzer ist als der Öffnungswinkel der korrespondierenden Aufnahme, wobei die Verschlusswirkung bei dieser Konstruktion ähnlich wie beim gattungsbildenden Stand der Technik auf der besonders großen Fläche der Wechselwirkungszone beruht.

Besonders vorteilhafte Ausführungsformen der Erfindung sind Gegenstand der abhängigen Ansprüche.

Aufgrund der erwiesenen Biokompatibilität besteht der Sockel vorzugsweise im Wesentlichen aus Metall oder einer Metalllegierung, insbesondere aus Titan oder eine Titanlegierung. Als wesentliches Material für den Aufbau haben sich Titan, Titanlegierungen und Zirkon-Oxyd bewährt.

Ein wesentliches Problem bei zweiteiligen Zahnimplantaten ist die Erzielung einer Verdrehsicherung des Aufbaus gegenüber dem Sockel einerseits und eine präzise Ausrichtbarkeit des Aufbaus relativ zum Sockel andererseits. Bei einer vorteilhaften Weiterbildung der Erfindung ist daher vorgesehen, dass der Aufbau apikal des konischen Verbindungsbereichs einen nicht-rotationssymmetrischen Verdrehschutzvorsprung aufweist, der formschlüssig in eine korrespondierende Verdrehschutzausnehmung des Sockels einführbar ist. Der Verdrehschutzvorsprung und die korrespondierende Verdrehschutzausnehmung weisen bevorzugt axial ausgerichtete Wandungen auf. Durch die fehlende Rotationssymmetrie ist bei formschlüssigem Eingreifen des Vorsprungs in die Ausnehmung der Verdrehschutz gegeben. Um eine gute Ausrichtbarkeit zu erreichen, kann zusätzlich vorgesehen sein, dass der Verdrehschutzvorsprung und die korrespondierende Verdrehschutzausnehmung mehrfach Achsen- oder mehrfach rotations-inversions-symmetrisch ausgebildet sind. Der erstgenannte Fall tritt beispielsweise bei gleichmäßigen, geradzahligen Vieleck- oder Sternformen auf, während der zweite Fall beispielsweise bei gleichmäßigen, ungeradzahligen Vieleck- oder Sternformen als Profil des Verdrehvorsprungs und der Verdrehschutzausnehmung auftritt. Derartige Verdrehschutzmaßnahmen sind im Grunde aus der DE 600 022 35 T2 bekannt. Um die Ausrichtbarkeit zu verbessern, sollte eine Symmetrie hoher Ordnung verwirklicht werden. Bevorzugt werden 12-facheVieleck-, Stern oder Kleeblattformen.

Um eine rein mechanische Vorfixierung im Kieferknochen zu erreichen, trägt der Körper vorzugsweise eine makroskopische Außengewindestruktur. Diese lässt sich, wie aus dem Stand der Technik bekannt, in eine vorgefertigte Ausnehmung im Kieferknochen eindrehen und stellt eine formschlüssige mechanische Fixierung des Sockels dar, die ein Anwachsen des Gewebes an der Sockeloberfläche erlaubt. Günstig sind hierbei selbstschneidende Gewindestrukturen.

Bevorzugt weist der Hals eine umlaufende Ringnut auf. Die Ringnut trägt günstigerweise einen kreisabschnittförmigen Querschnitt mit einem Radius von 0,2 bis 0,3 Millimetern, insbesondere von etwa 2,5 Millimetern. Eine solche Ringnut verbessert die Anwachsung erwünschten Gewebes an der Sockeloberfläche. Ein häufiges Problem bei der Anwachsung sind nämlich schnell wachsende Epithelzellen, die von koronal nach apikal an der Sockeloberfläche entlangwachsen und damit die Anwachsung von Zahnfleisch am Hals des Sockels bzw. bei sehr weitgehendem Epithelzellwuchs auch die Anwachsung der Knochenzellen an der Körperoberfläche behindern oder verhindern. Es hat sich jedoch herausgestellt, dass scharfe Kanten, wie sie beispielsweise die Nutränder einer Ringnut mit bevorzugt etwa halbkreisförmigen Querschnitt aufweisen, das unerwünschte Epithelzellwachstum behindern. Somit gewinnen die langsamer wachsenden Zahnfleisch- bzw. Bindegewebszellen ausreichend Zeit, um im Halsbereich anzuwachsen, bevor die Epithelzellen diese Bereiche überwachsen. Damit besteht auch keine Gefahr mehr, dass weiter apikal liegende Bereiche von den Epithelzellen überwachsen werden, sodass die noch langsamer wachsenden Knochenzellen ausreichend Zeit haben, um im Körperbereich des Sockels anzuwachsen. Ein zusätzlicher Effekt der vorteilhaften Ringnut ist die Vergrößerung der Wechselwirkungsoberfläche im Vergleich zu einem im Wesentlichen zylinderförmigen Sockelhals. Hierdurch wird die Gesamtkraft, mit der das Implantat im Gewebe gehalten wird, vergrößert. Schließlich stellt das in die Ringnut eingewachsene Bindegewebe eine Dichtung nach Art eines O-Rings dar, der einen guten Schutz vor dem Eindringen von unerwünschten Schmutzpartikeln bietet.

Weitere Merkmale und Vorteile der Erfindung ergeben sich aus der nachfolgenden, speziellen Beschreibung und den Zeichnungen.

### Kurze Beschreibung der Zeichnungen

Es zeigen:
- Figur 1:: eine Schnittdarstellung einer ersten Ausführungsform eines erfindungsgemäßen Zahnimplantatsockels
- Figur 2:: eine Seitenansicht des Sockels von Figur 1
- Figur 3:: eine Draufsicht auf den Sockel von Figur 1
- Figur 4:: eine Unteransicht des Sockels von Figur 2
- Figur 5:: eine Schnittdarstellung einer zweiten Ausführungsform eines erfindungsgemäßen Zahnimplantatsockels
- Figur 6:: eine Seitenansicht des Sockels von Figur 5
- Figur 7:: eine Schnittdarstellung des Sockels von Figur 1 mit einer ersten Ausführungsform eines eingesetzten Aufbaus
- Figur 8:: eine Schnittdarstellung eines Sockels mit stoffschlüssig verbundener, zweiter Ausführungsform eines Aufbaus.
- Figur 9:: eine Seitenansicht einer dritten Ausführungsform eines Aufbaus
- Figur 10:: eine teilweise geschnittene und ausgebrochene Seitenansicht des Sockels von Figur 9
- Figur 11:: eine Seitenansicht einer vierten Ausführungsform eines Aufbaus
- Figur 12:: eine teilweise geschnittene und ausgebrochene Darstellung des Aufbaus von Figur 11

### Ausführliche Darstellung bevorzugter Ausführungsformen

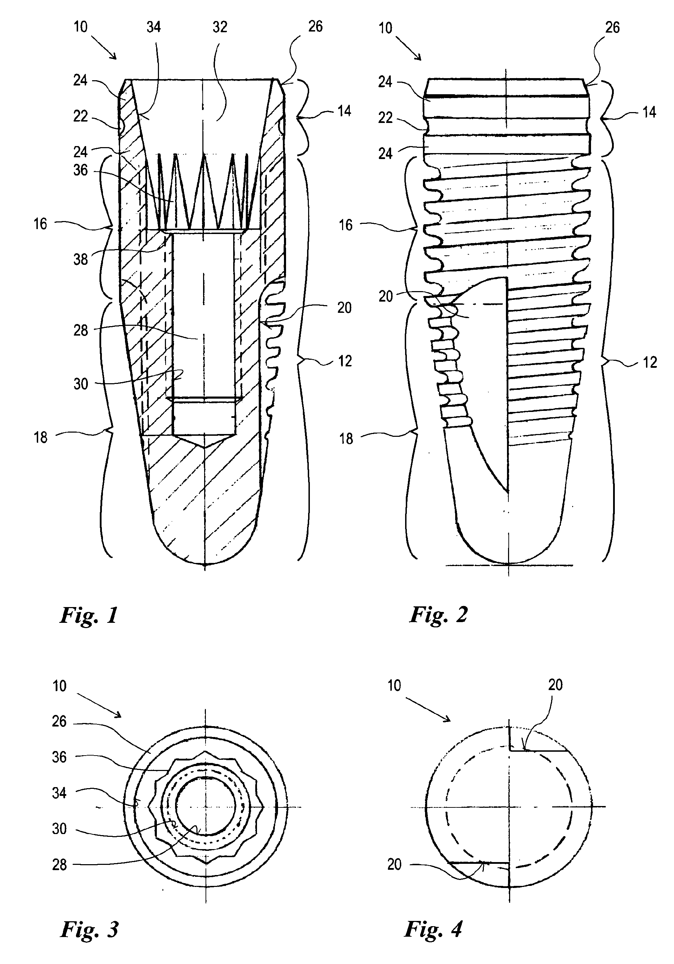

Die Figuren 1 bis 4 zeigen verschiedene Darstellungen einer bevorzugten Ausführungsform eines erfindungsgemäßen Implantatsockels 10. Der Sockel 10 umfasst einen apikal gelegenen Körper 12 und einen sich koronal daran anschließenden Hals 14. Im implantierten Zustand (vgl. Figur 16) ist der Körper 12 im Wesentlichen von Knochengewebe umgeben, während der Hals 14 im Wesentlichen von Zahnfleischgewebe umwachsen ist. Bei der bevorzugten Ausführungsform ist der Sockelkörper 12 in zwei Abschnitte unterteilt, nämlich einen koronal gelegenen, im Wesentlichen zylindrischen Abschnitt 16 und einen apikal hierzu gelegenen, konisch zu- und in einem Radius auslaufenden Abschnitt 18. Beide Abschnitte 16, 18 tragen ein mehrgängiges, makroskopisches Außengewinde, dessen Tiefe sich in Richtung auf die Kegelspitze im konischen Abschnitt 18 verringert und gegen Null ausläuft. Das Gewinde dient der mechanischen Vorfixierung des Sockels in einer vor dem Einsetzen in den Kieferknochen gebohrten Ausnehmung. Das Gewinde ist vorzugsweise selbstschneidend ausgebildet, sodass ein Eindrehen in eine Knochenausnehmung mit geraden Bohrlochwänden möglich ist.

Die gezeigte Ausführungsform trägt eine sich axial erstreckende und einen rechten Winkel mit einer Radialrichtung einnehmende Fräskante 20, deren Frästiefe in etwa der Gewindetiefe entspricht. Die Fräskante 20 erstreckt sich über den gesamten, gewindetragenden Bereich des konischen Abschnitts 18 und ragt koronal geringfügig über diesen hinaus und in den zylindrischen Abschnitt 16 hinein. Eine derartige Fräskante 20, die nicht die makroskopische Gewindestruktur trägt, hat sich als vorteilhafte Wechselwirkungsfläche mit dem Knochengewebe ergeben und verbessert das Anwachsverhalten, sodass eine festere Einwachsung des Sockels 10 in den Kieferknochen erreicht wird. Zur Steigerung dieses Effektes weist die dargestellte Ausführungsform zwei derartige Fräskanten 20 auf, die einander punktsymmetrisch zum Mittelpunkt der Querschnittsebene des Sockels gegenüberliegen. Bei anderen, nicht dargestellten Ausführungsformen können mehr oder weniger als zwei Fräskanten 20 vorgesehen sein. Auch die rechtwinklige Ausbildung der Fräskanten 20 ist nicht zwingend erforderlich, wenngleich fertigungstechnisch vorteilhaft. Die winklige Ausgestaltung der Fräskante 20 hat im Vergleich zu einer grundsätzlich ebenfalls möglichen Fräskante entlang einer durchgehenden Kreissehne (bezogen auf den Querschnitt) den Vorteil einer effizienteren Sicherung gegen Rotations- und radiale Translationskräfte, die auf den eingewachsenen Sockel 10 wirken.

Der Hals 14 der dargestellten Ausführungsform des Implantatsockels 10 ist in seinem apikalen Bereich im Wesentlichen zylindrisch ausgebildet und weist eine die Zylinderfläche unterbrechende Ringnut 22 auf. Bei der dargestellten Ausführungsform weisen die der Ringnut 22 benachbarten, zylindrischen Bereiche 24 des Halses 14 in etwa die gleiche Breite auf, die ihrerseits der Breite der Ringnut 22 in etwa entspricht. Wie erwähnt, ist der Hals 14 im eingewachsenen Zustand im Wesentlichen von Zahnfleischgewebe umgeben. Das Zahnfleischgewebe wächst insbesondere auch in die Ringnut 22 ein und bildet eine wirksame Dichtung nach Art eines O-Rings. Außerdem wirken die Kanten der Ringnut 22 an den Übergängen zu den zylindrischen Bereichen 24 wachstumshemmend auf Epithelzellen, die typischerweise sehr schnell von koronal nach apikal an der Außenwand des Sockels 10 entlang wachsen können und die Anwachsung von langsamer wachsenden Zahnfleischgewebezellen im Bereich des Halses 14 und ggf. Knochengewebezellen im Bereich des Körpers 12 behindern können.

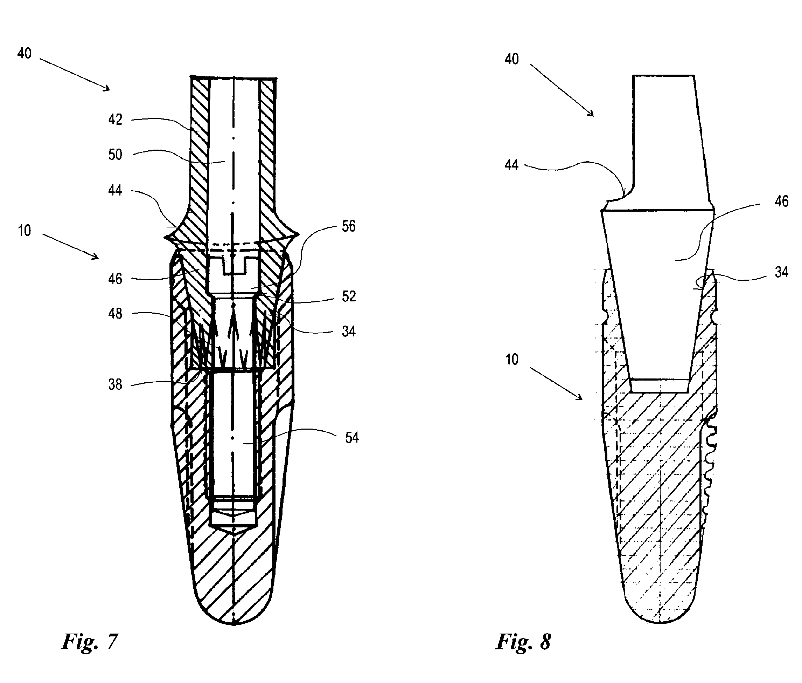

Im koronalen Endbereich des Halses 14 trägt dieser eine Anfasung 26, mit der der koronale Abschluss des Halses 14 verjüngt wird. Hierdurch gelingt eine bessere Konturanpassung an einen auf dem Sockel aufsetzenden Aufbau, der weiter unten in Verbindung mit Figur 7 näher beschrieben werden soll.

In seinem Inneren ist der Sockel 10 im Wesentlichen hohl ausgebildet, wie insbesondere aus der Schnittdarstellung von Figur 1 ersichtlich ist. Der apikale Bereich der inneren Ausnehmung des Sockels 10 ist als Sackbohrung 28 mit einem Innengewinde 30 ausgebildet. Dieses Innengewinde 30 dient der weiter unten in Zusammenhang mit Figur 7 zu beschreibenden Schraubfixierung des Aufbaus. Koronal an die Sackbohrung 28 schließt sich ein Aufnahmebereich 32 für den Aufbau an, wobei der Aufnahmebereich 32 in zwei Abschnitte unterteilt ist. Ein koronaler Abschnitt 34, der als Einführbereich für den Aufbau dient, ist im Wesentlichen nach apikal hohlkegelförmig zulaufend ausgebildet, während der apikal gelegene Abschnitt 36, der als Verdrehschutz für den Aufbau dient, eine gerade Wandung aufweist, die die Hohlkegelfläche fortsetzende Vorsprünge trägt. In der Draufsicht der Figur 3 ist die resultierende nicht-rotationssymmetrische Struktur gut erkennbar, die bei der gezeigten Ausführungsform die Form eines 12-strahligen Sterns aufweist. Diese Struktur dient, wie weiter unten in Zusammenhang mit Figur 7 näher erläutert wird, der Verdrehsicherung des Aufbaus. Der Aufnahmebereich 32 ist auch an seiner engsten Stelle, d.h. seiner apikalen Grenze, breiter ausgebildet als die benachbarte Sackbohrung 28, sodass sich eine Schulter 38 bildet. Die Schulter 38 dient als Anschlagfläche für den weiter unten zu beschreibenden Aufbau.

Der in den Figuren 1 und 2 erkennbaren makroskopischen Oberflächenstruktur des Sockels 10 ist eine in den Figuren nicht erkennbare und grundsätzlich auch unabhängig von der makroskopischen Struktur vorteilhaft einsetzbare Mikrostruktur überlagert. Diese Mikrostruktur lässt sich insbesondere gemäß ihren Rauheitswerten charakterisieren. Zur Charakterisierung kann insbesondere der so genannte RA-Wert gemäß DIN EN ISO 4287 dienen, der dem arithmetischen Mittenrauwert entspricht. Bei einer besonders bevorzugten Ausführungsform beträgt der RA-Wert, gemessen im Rahmen einer Linienmessung über 2000 Mikrometer im Bereich des Halses 14 RA=0,68 ± 0,02 Mikrometer und im Bereich des Körpers RA 0,90 ± 0,03 Mikrometer. Gemessen über eine Strecke von 800 Mikrometern ergaben sich bei demselben Implantatsockel im Bereich des Halses RA=0,61 ± 0,03 Mikrometer und im Bereich des Körpers RA=0,79 ± 0,03 Mikrometer. Eine Flächenmessung mittels eines AFM (atomic force microscope) über 100 x 100 Mikrometer ergab am selben Messobjekt einen SA-Wert im Bereich des Halses von SA=0,451 ± 0,023 Mikrometer und im Bereich des Körpers SA=0,598 ± 0,031 Mikrometer.

Zur Herstellung derartiger Rauheitswerte wird, ausgehend von einer geschliffenen oder polierten, die gewünschte Makrostruktur tragenden Oberfläche, der Körper 12 des Sockels 10 mit einem harten Strahlmittel, wie beispielsweise Sand, Glasperlen oder Korund geeigneter Größe bis zur Erzielung eines RA-Wertes, der größer als der letztendlich gewünschte RA-Wert ist, gestrahlt. Dieser temporäre Rauheitswert kann insbesondere eine Größenordnung von RA=0,85 bis 1,20 Mikrometer annehmen. Im Fall des bereits weiter oben beschriebenen Beispiels lag der temporäre RA-Wert bei einer Linienmessung über 2000 Mikrometer bei RA=1,13 ± 0,04 Mikrometer und bei einer Linienmessung über 800 Mikrometer bei RA=0,89 ± 0,02 Mikrometer. Der entsprechende SA-Wert einer Flächenmessung über 100 x 100 Mikrometer betrug SA=0,705 ± 0,033 Mikrometer. In einem nachfolgenden Verfahrensschritt wird der gesamte Sockel 10 einer basischen Ätz-Behandlung mit einem basischen Ätzmittel, das eine hohe Konzentration von Kaliumhydroxid enthält und grundsätzlich aus der DE 603 01 796 T2 bekannt ist, unterworfen. Das Ätzen wird solange durchgeführt, bis Hals 14 und Körper 12 des Sockels 10 die gewünschten Rauheitswerte ihrer Oberflächen erreicht haben.

Bei einem konkreten Herstellungsverfahren werden ein maschinierter Implantathals und ein Korund-gestrahlter Körper mit 1 mol/l NaOH + 2% H₂O₂ bei 80° Celsius für 10 Minuten und nachfolgender Säureätzung bei 98° Celsius für 1 Stunde behandelt. Es entsteht ein Rauigkeitsgradient vom Implantathals zum Implantatkörper mit einer Rauigkeitsdifferenz von Ra=0,18 Mikrometer. Die Rauigkeitsdifferenz zwischen Hals und Körper erlaubt ein selektives Anwachsen von Fibroblasten im Halsbereich und Osteoblasten im Körperbereich. Gleichzeitig weist die Halsoberfläche auch gute osteogene Eigenschaften auf, sodass es im Bereich des Knochen/Zahnfleischübergangs auch bei nicht-geradem Knochenniveau zu einer guten Anwachsung der Osteoblasten kommen kann. Diese ist bei glatten Halsoberflächen nicht möglich. Die Erfinder gehen davon aus, dass durch die Rauheit des Halses die initiale Hydrophilie der Implantatoberfläche erhöht wird, was eine bessere Benetzung der Materialoberfläche mit Blutbestandteilen erwarten lässt. Hierdurch ergibt sich eine sehr hohe initale Adhäsionsrate für Fibroblasten und Osteoblasten. Dies konnte in vitro nach vierstündiger Inkubation von Fibroblasten und Osteoblasten gezeigt werden. Diese Eigenschaften führen dazu, dass in der ersten Phase der Wundheilung ein bakteriendichter Verschluss im Halsbereich erzielt wird. Glatte Oberflächen besitzen diese Eigenschaft nur in sehr geringem Maße. Die so verringerte Adhäsion erwünschter Zelltypen kann zu einer erhöhten Wachstumsrate von Epithelzellen führen, die dann ein langes Saumepithel am Hals entlang bis zum Übergang zwischen Hals und Körper ausbilden. Dieser Bereich ist dann empfindlich gegenüber einer bakteriellen Invasion (Perimplantitis). Ein Verhindern des epithelialen Tiefenwachstums durch eine feste Bindgewebsmanschette im Halsbereich, die durch die erfindungsgemäße Ausgestaltung der Oberflächen von Hals und Körper ermöglicht wird, verhindert Knochendurchbrüche.

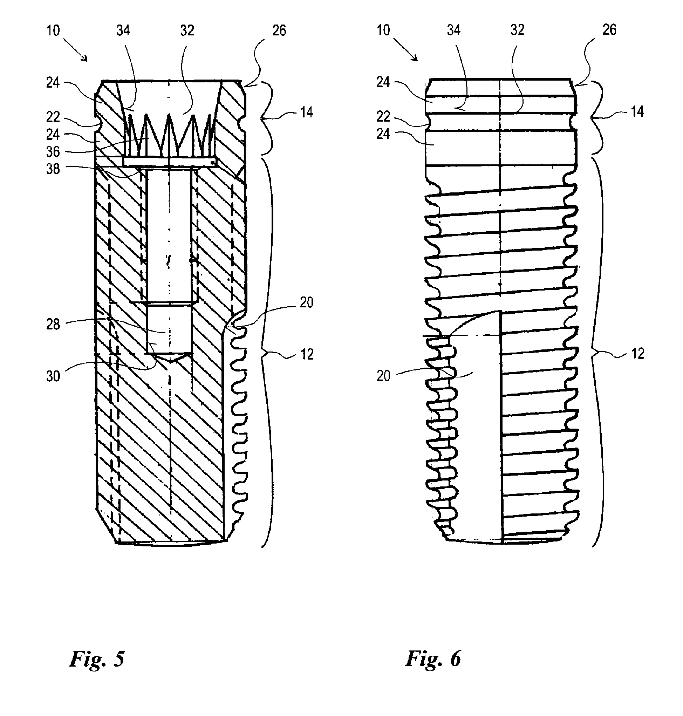

Die Figuren 5 und 6 stellen unterschiedliche Ansichten eines zweiten Ausführungsbeispiels eines erfindungsgemäßen Sockels 10 dar. Im Unterschied zu dem Sockel 10 gemäß den Figuren 1 und 2 ist der Gesamtkörper 12 im Wesentlichen zylindrisch ausgebildet und trägt ein durchgehendes Gewinde. Im übrigen wird auf die Beschreibung zu den Figuren 1 bis 4 verwiesen, deren Bezugszeichen in den Figuren 5 und 6 übernommen wurden.

Figur 7 zeigt den Sockel 10 gemäß den Figuren 1 und 2 mit einem eingesetzten Aufbau 40. Der Aufbau 40 umfasst einen im Wesentlichen hohlzylindrischen Koronalbereich 42, einen sich apikal anschließenden Stützbereich 44, einen sich apikal an diesen anschließenden Verbindungsbereich 46 und einen den apikalen Abschluss des Aufbaus 40 bildenden Verdrehschutzvorsprung 48. Der Aufbau 40 ist von einer Durchgangsbohrung 50 durchsetzt, die in ihrem koronalen Bereich einen größeren Durchmesser aufweist als in ihrem apikalen Bereich, sodass sich eine Schulter 52 bildet. Der konisch nach apikal zulaufende Verbindungsbereich 46 ist korrespondierend zu dem konischen Einführungsbereich 34 des Aufnahmeraums 32 des Sockels 10 gestaltet. Der Verdrehschutzvorsprung 48 ist korrespondierend zu dem apikalen Verdrehschutzbereich 36 des Aufnahmeraums 32 des Sockels 10 gestaltet. Die Schulter 38 im Sockel 10 bildet eine Anschlagfläche für die apikale Abschlussfläche des Verdrehschutzvorsprungs 48. Der Aufbau 40 kann drehfest in den Sockel 10 eingeführt werden, wobei der konische Einführungsbereich 34 des Aufnahmeraums 32 des Sockels 10 als Zentrierhilfe dient. Zur axialen Fixierung des Aufbaus 40 kann eine Fixierschraube 54 in die Durchgangsbohrung 50 eingeführt und mit dem Innengewinde 30 im Sockel 10 verschraubt werden. Der Kopf 56 der Schraube 54, dessen Durchmesser den Schraubenschaft überragt, findet dabei ein Widerlager an der Schulter 52.

Wie erwähnt, ist der konische Verbindungsbereich 46 des Aufbaus 40 an den konischen Einführbereich 34 des Aufnahmeraums 32 des Sockels 10 angepasst. Dabei ist vorgesehen, dass der Aufbau-Kegelwinkel 20-60 Bogenminuten größer ist als der Sockel-Öffnungswinkel, sodass am koronalen Rand des Sockels 10 eine Kontaktlinie, auf die ein großer Druck wirkt, entsteht. Diese Kontaktlinie bildet eine zuverlässige Gas- und Bakteriendichtung. Man beachte, dass der Aufbau 40 mit seiner apikalen Endfläche nicht an der Schulter 38 des Sockels 10 anschlagen darf. Es ist auch vorteilhaft, wenn die nicht-rotationssymmetrischen Vorsprünge im Verdrehschutzbereich 36 des Aufnahmeraumes 32 des Sockels 10 exakt axial ausgerichtete Wände aufweisen, um eine hohe Axialtoleranz zu gewährleisten.

Der Stützbereich 44 des Aufbaus 40 dient der Abstützung einer in den Figuren nicht dargestellten Krone, die an dem Aufbau 40 befestigt wird. Zur guten Anpassung des Aufbaus 40 an die Krone einerseits und zur guten Anwachsung von Zahnfleischgewebe andererseits ist der Stützbereich bevorzugt doppelt konkav ausgebildet.

Figur 8 zeigt eine Ausführungsform, bei der der Aufbau 40 stoffschlüssig mit dem Sockel verbunden ist. Besondere Maßnahmen zum Verdrehschutz sind in diesem Fall nicht erforderlich.

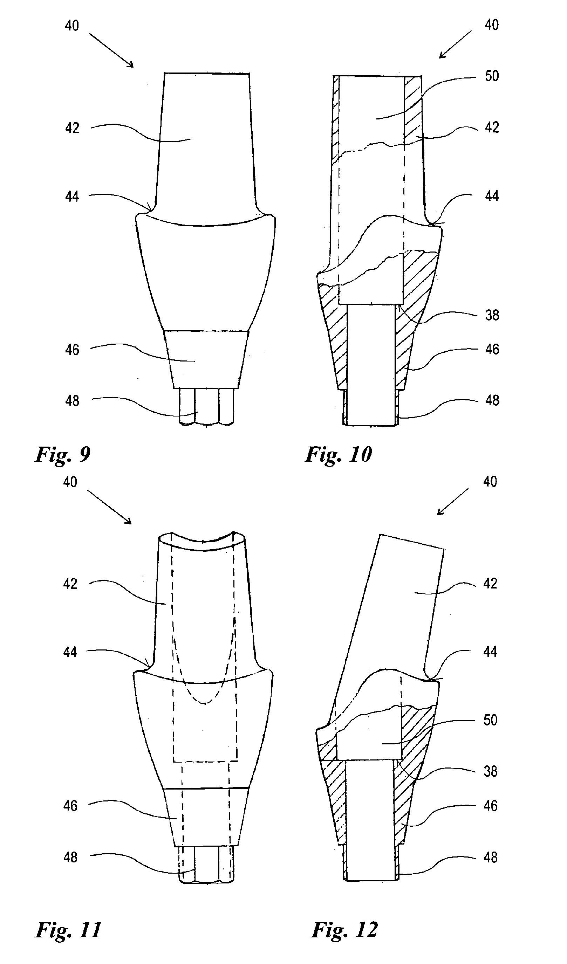

Die Figuren 9 und 10 zeigen zwei Ansichten einer weiteren Ausführungsform eines Aufbaus, wobei der koronale, den Sockel 10 im montierten Zustand überragende Bereich eine komplexere, an eine spezielle Zahngeometrie angepasste Struktur aufweist.

Die Figuren 11 und 12 zeigen eine weitere Ausführungsform eines vorteilhaften Aufbaus 40, die der Ausführungsform der Figuren 9 und 10 ähnlich ist, jedoch für den Fall eines Winkels zwischen der Zahnkrone und der künstlichen Wurzel, die der Implantatsockel bildet, vorgesehen ist.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten anhand gegeben.

### Bezugszeichenliste

- 10: Sockel
- 12: Körper von 10
- 14: Hals von 10
- 16: zylinderischer Abschnitt von 12
- 18: konischer Abschnitt von 12
- 20: Fräskante
- 22: Ringnut von 14
- 24: zylindrischer Bereich von 14
- 26: Anfasung
- 28: Sackbohrung
- 30: Innengewinde
- 32: Aufnahmebereich
- 34: Einführbereich von 32
- 36: Verdrehschutzbereich von 32
- 38: Schalter
- 40: Aufbau
- 42: Koronalbereich von 40
- 44: Stützbereich von 40
- 46: Verbindungsbereich von 40
- 48: Verdrehschutzvorsprung
- 50: Durchgangsbohrung
- 52: Schulter
- 54: Fixierschraube
- 56: Kopf von 54

## Patentansprüche

1. Zahnimplantat, umfassend
- einen bereichsweise in einen Kieferknochen inserierbaren Sockel (10) mit einem apikal gelegenen Körper (12) und einem koronal gelegenen Hals (14), deren äußere Oberflächen jeweils eine Oberflächen-Mikrostruktur vorgegebener Rauheit aufweisen, und
- einen Aufbau (40), der mit einem konischen Verbindungsbereich (46) in einen Aufnahmebereich (32) des innen hohl ausgebildeten Sockels (10) einsetzbar ist, wobei der konische Verbindungsbereich (46) eine mit einem Aufbau-Kegelwinkel konisch nach apikal zulaufende Außenfläche aufweist und der Aufnahmebereich (32) eine mit einem Sockel-Öffnungswinkel konisch nach apikal zulaufende Innenfläche (34) aufweist,
**dadurch gekennzeichnet,**
**dass** der Aufbau-Kegelwinkel 20 bis 60 Bogenminuten größer ist als der Sockel-Öffnungswinkel.

2. Zahnimplantat nach einem der vorangehenden Ansprüche,
**dadurch gekennzeichnet,**
**dass** der Sockel (10) im Wesentlichen aus Metall oder einer Metalllegierung, insbesondere aus Titan oder einer Titanlegierung besteht.

3. Zahnimplantat nach einem der vorangehenden Ansprüche,
**dadurch gekennzeichnet,**
**dass** der Aufbau (40) im Wesentlichen aus Titan, einer Titanlegierung oder Zirkon-Oxid besteht.

4. Zahnimplantat nach einem der vorangehenden Ansprüche,
**dadurch gekennzeichnet,**
**dass** der Aufbau (40) apikal des konischen Verbindungsbereichs (46) einen nicht-rotationssymmetrischen Verdrehschutzvorsprung (48) aufweist, der formschlüssig in eine korrespondierende Verdrehschutzausnehmung (36) des Sockels (10) einführbar ist.

5. Zahnimplantat nach einem der vorangehenden Ansprüche,
**dadurch gekennzeichnet,**
**dass** die Körper (12) eine makroskopische Außengewindestruktur trägt.

6. Zahnimplantat nach einem der vorangehenden Ansprüche,
**dadurch gekennzeichnet,**
**dass** der Hals (14) eine umlaufende Ringnut (22) aufweist.

7. Zahnimplantat nach Anspruch 6,
**dadurch gekennzeichnet,**
**dass** die Ringnut (22) einen kreisabschnittförmigen Querschnitt mit einem Radius von 0,2 bis 0,3 Millimetern, insbesondere von etwa 2,5 Millimetern trägt.

8. Zahnimplantat nach Anspruch 5,
**dadurch gekennzeichnet,**
**dass** der Körper (12) auf seiner Außenseite eine sich axial erstreckende Fräskante (20) trägt, deren Frästiefe in etwa der Gewindetiefe entspricht.

9. Zahnimplantat nach Anspruch 8,
**dadurch gekennzeichnet,**
**dass** sich die Fräskante (20) über den gesamten, gewindetragenden Bereich eines apikalen, konischen Abschnitts (18) des Körpers (12) erstreckt und ragt koronal geringfügig über diesen hinaus und in einen zylindrischen Abschnitt (16) des Körpers (12) hineinragt.

10. Zahnimplantat nach einem der Ansprüche 8 bis 9,
**dadurch gekennzeichnet,**
**dass** die Fräskante rechtwinklig ausgebildet ist.
